(19) Europäisches Patentamt / European Patent Office / Office européen des brevets

(11) **EP 4 306 588 B1**

(12) **EUROPEAN PATENT SPECIFICATION**

(45) Date of publication and mention
of the grant of the patent:
**08.04.2026  Bulletin 2026/15**

(21) Application number: **22883815.7**

(22) Date of filing: **29.09.2022**

(51) International Patent Classification (IPC):
*C08J 11/08* (2006.01)      *C08L 69/00* (2006.01)
*B29B 17/02* (2006.01)      *C08J 11/06* (2006.01)
*B29K 69/00* (2006.01)      *C08G 64/42* (2006.01)

(52) Cooperative Patent Classification (CPC):
**B29B 17/02; C08G 64/42; C08J 11/06;**
B29B 2017/0293; B29K 2069/00; C08J 2369/00;
Y02W 30/62

(86) International application number:
**PCT/KR2022/014709**

(87) International publication number:
**WO 2023/068591 (27.04.2023 Gazette 2023/17)**

(54) **METHOD FOR PREPARING RECYCLED POLYCARBONATE AND RECYCLED POLYCARBONATE**

VERFAHREN ZUR HERSTELLUNG VON RECYCELTEM POLYCARBONAT UND RECYCELTEM POLYCARBONAT

PROCÉDÉ DE PRÉPARATION DE POLYCARBONATE RECYCLÉ ET POLYCARBONATE RECYCLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.10.2021  KR 20210138175**

(43) Date of publication of application:
**17.01.2024  Bulletin 2024/03**

(73) Proprietor: **LG Chem, Ltd.
Seoul 07336 (KR)**

(72) Inventors:
• **SEO, Seog Jae
Daejeon 34122 (KR)**
• **KIM, Gyoungsik
Daejeon 34122 (KR)**
• **SEON, Gyeongho
Daejeon 34122 (KR)**
• **JU, Chang Hwan
Daejeon 34122 (KR)**
• **HAN, Danbi
Daejeon 34122 (KR)**
• **CHOE, Jae Hoon
Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
WO-A1-2019/156432      WO-A1-2020/074983
JP-A- 2003 231 120      KR-A- 20140 097 918
KR-A- 20150 082 214      KR-A- 20170 086 515
KR-A- 20210 067 555      US-A- 4 066 630
US-A- 5 231 149      US-A1- 2010 179 292
US-B1- 6 500 914      US-B2- 9 096 718

• **OKAMOTO MASAYA: "Relationship between the end-cap structure of polycarbonates and their impact resistance", POLYMER, ELSEVIER, AMSTERDAM, NL, vol. 42, no. 20, 4 May 2017 (2017-05-04), pages 8355 - 8359, XP085005382, ISSN: 0032-3861, DOI: 10.1016/S0032-3861(01)00345-7**

## Description

[Technical Field]

The present invention relates to a method for preparing recyclable polycarbonate, and more particularly, to a method for preparing recyclable polycarbonate using a phenol end-capper.

[Background Art]

Since plastics are readily processed and their physical and chemical properties are easily changed, plastics are widely used in modern society. Among them, polycarbonate is one of the plastics that are widely used in various machines or electrical products due to its excellent mechanical properties such as insulation, impact resistance, and processability. Although landfill and incineration methods are frequently used to process waste plastic discarded after use, it is difficult to naturally decompose plastics naturally, so that when landfilled, plastics may cause environmental problems such as water and soil pollution and may cause environmental problems such as air pollution when incinerated.

In order to solve such environmental problems, many studies have been conducted to process, purify, transform and recycle waste plastics, and some of the recycling methods have been put to practical use. However, since there is a disadvantage in that the unit cost of plastics recycled by the recycling method is high and the purity of the plastics cannot be significantly improved, the recycled plastic cannot be used in many applications. Further, it is difficult to process and purify recycled plastics because waste plastics with various colors are mixed, so that there is a disadvantage in that it is difficult to specify the desired physical and chemical properties and to implement colors.

Therefore, there is a continuous need for research on a method for preparing recyclable plastics capable of preventing deterioration in mechanical properties while significantly increasing the purity of recycled plastics. [Related Art Document] Korean Patent No. 10-2192506 US 6 500 914 B1 discloses an end-capped polycarbonate with a phenol content of 500 ppm or less.

WO2020/074983 A1 discloses an end-capped polycarbonate with an OH content of 568-845 ppm.

POLYMER, Vol. 42, No. 20, 8355-8359, discloses the end-capping of polycarbonate resulting in a low yellowing index. US 4 066 630 A and WO2019/156432 A1 disclose that end capping of polycarbonates results in good weather resistance. US2010/179292 A1 discloses a method to recycle polycarbonate by dissolving it and precipitating the polycarbonate from solution using an anti-solvent. US2010/179292 A1 does not disclose end-capping the dissolved polycarbonate and it does not involve a step of removing an impurity from dissolved polycarbonate before the end-capping using an adsorbent.

US 5 231 149 A, US 4 066 630 A and US 9 096 718 B2 disclose a solution-phase end-capping method of polycarbonate to make it more stable, but do not deploy the method to recycle polycarbonate. US 5 231 149 A, US 4 066 630 A and US 9 096 718 B2 also do not involve a step of removing an impurity from dissolved polycarbonate before the end-capping using an adsorbent.

[Detailed Description of the Invention]

[Technical Problem]

The present invention has been made in an effort to provide a method for preparing recyclable polycarbonate capable of preventing deterioration in mechanical properties and significantly increasing the purity of recyclable polycarbonate.

[Technical Solution]

The present invention provides a method for preparing recyclable polycarbonate, the method including: preparing a first solution by dissolving waste polycarbonate comprising phenol end groups in the backbone thereof in a solvent; preparing a second solution by adding a phenol end-capper to the first solution; removing impurities from the second solution by adding an adsorbent to the second solution; precipitating a polycarbonate resin by adding a non-solvent to the second solution from which the impurities have been removed; and collecting the precipitated polycarbonate resin.

Further embodiments are disclosed in the dependent claims.

[Advantageous Effects]

The recyclable polycarbonate prepared by the method for preparing recyclable polycarbonate of the present invention does not deteriorate in mechanical properties, has high purity, and effectively suppresses yellowing.

[Brief Description of Drawings]

FIG. 1 illustrates the results of 1H-NMR analysis of the recyclable polycarbonate of Comparative Example 1.
FIG. 2 illustrates the results of 1H-NMR analysis of the recyclable polycarbonate prepared by the method for preparing recyclable polycarbonate of the present invention.

[Best Mode]

Hereinafter, specific exemplary embodiments will be described in more detail.

The present invention provides a method for preparing recyclable polycarbonate, the method including: preparing a first solution by dissolving waste polycarbonate comprising phenol end groups in the backbone thereof in a solvent; preparing a second solution by adding a phenol end-capper to the first solution; removing impurities from the second solution by adding an adsorbent to the second solution; precipitating a polycarbonate resin by adding a non-solvent to the second solution from which the impurities have been removed; and collecting the precipitated polycarbonate resin.

Polycarbonate is one of the plastics that are widely used in various machines or electrical products due to its excellent mechanical properties such as insulation, impact resistance, and processability. When the backbone of polycarbonate degrades upon exposure to UV light, oxygen ($O_2$) or heat, fragments having ends of phenol, aldehyde or benzyl alcohol may be produced. Among them, phenol may cause yellowing during the extrusion or injection process when recyclable polycarbonate is prepared from waste polycarbonate, and may cause deterioration in mechanical properties.

The method for preparing recyclable polycarbonate according to the present invention may effectively prevent the deterioration in mechanical properties and the yellowing phenomenon which may occur upon the preparation of recyclable polycarbonate by protecting phenol end groups present in the backbone of waste polycarbonate with a phenol end-capper.

In an exemplary embodiment of the present invention, the phenol end-capper is an anhydride or acyl halide.

In an exemplary embodiment of the present invention, the phenol end-capper is an anhydride.

In an exemplary embodiment of the present invention, the anhydride is acetic anhydride or benzoic anhydride.

In an exemplary embodiment of the present invention, the phenol end-capper is an acyl halide.

In an exemplary embodiment of the present invention, the acyl halide is benzoyl chloride or 2,2-dimethylpropanoyl chloride.

In an exemplary embodiment of the present invention, the adsorbent is one or a combination of two or more selected from the group consisting of silica, alumina, activated carbon, acid clay, magnesium silicate and aluminosilicate.

The adsorbent is specifically acid clay.

In an exemplary embodiment of the present invention, the adsorbent is included in an amount of 0.1 parts by weight to 5 parts by weight based on the total weight of 100 parts by weight of the second solution.

When the adsorbent is included in the second solution within the above-described range, impurities included in the second solution may be effectively removed.

In an exemplary embodiment of the present invention, the solvent is a cyclic ether-based solvent, a linear or cyclic carbonate-based solvent, a hydrocarbon solvent having 1 to 8 carbon atoms, which includes one or more halogen atoms, methylpyrrolidone, dimethylformamide or dimethyl sulfoxide.

In an exemplary embodiment of the present specification, the cyclic ether-based solvent may be tetrahydrofuran, 1,4-dioxane or 1,3-dioxolane.

In an exemplary embodiment of the present invention, the linear carbonate-based solvent may be dimethyl carbonate (DMC), diethyl carbonate (DEC), dipropyl carbonate (DPC), ethylpropyl carbonate (EPC), ethylmethyl carbonate (EMC) or methylpropyl carbonate (MPC), but is not limited thereto.

In an exemplary embodiment of the present invention, the cyclic carbonate-based solvent may be ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), vinyl ethylene carbonate or fluoroethylene carbonate, but is not limited thereto. Preferably, the cyclic carbonate-based solvent may be propylene carbonate.

In an exemplary embodiment of the present invention, the hydrocarbon solvent having 1 to 8 carbon atoms, which includes one or more halogen atoms, may be dichloromethane, chloroform, tetrachloroethane or ethylene dichloride, but is not limited thereto.

In the present invention, the solvent may be preferably dichloromethane.

In the present invention, the non-solvent is a hydrocarbon compound including one or more selected from the group consisting of an alcohol, ketone, ether, a cycloalkane, ester, carboxylic acid and a nitrile.

The non-solvent means a compound having a Hansen solubility parameter (HSP) of 5 to 14 with respect to the polycarbonate.

The Hansen solubility parameter with respect to the polycarbonate may be specifically calculated from non-polar dispersion force, dipole-dipole force due to permanent dipole, and hydrogen bonding force, in consideration of the degree of intra-material bonding of the polycarbonate.

Specifically, the compound having a Hansen solubility parameter (HSP) of 5 to 14 with respect to the polycarbonate is a hydrocarbon compound having 1 to 10 carbon atoms, which includes one or more selected from the group consisting of an alcohol, ketone, ether, a cycloalkane, ester, carboxylic acid and a nitrile.

More specifically, the compound having a Hansen solubility parameter (HSP) of 5 to 14 with respect to the polycarbonate is a hydrocarbon compound having 1 to 5 carbon atoms, which includes one or more selected from the group consisting of an alcohol, ketone, ester and a nitrile.

In an exemplary embodiment of the present invention, the non-solvent is acetone.

In an exemplary embodiment of the present invention, a catalyst may be further added to the first solution.

The catalyst may promote the esterification reaction of a phenol end group included in the waste polycarbonate under mild conditions such as room temperature.

The catalyst may be 4-(N,N-dimethylamino)pyridine (DMAP), 4-(N,N-dimethylamino)pyridine hydrochloride (DMAP·HCl), copper (II) tetrafluoroborate or $Cu(OTf)_2$, but is not limited thereto.

Preferably, the catalyst may be $Cu(OTf)_2$.

In an exemplary embodiment of the present invention, the phenol end-capper is included in an amount of 0.1 parts by weight to 5 parts by weight based on the total weight of 100 parts by weight of the first solution.

Preferably, the phenol end-capper is included in an amount of 0.1 parts by weight to 1 part by weight based on the total weight of 100 parts by weight of the first solution.

When the phenol end-capper is included in the first solution within the above-described range, the phenol end-capper may be sufficiently reacted with phenol end groups included in the waste polycarbonate.

In an exemplary embodiment of the present invention, the collecting of the precipitated polycarbonate resin includes: separating the precipitated polycarbonate resin with a filter; washing the precipitated polycarbonate resin; and drying the precipitated polycarbonate resin.

In the separating of the precipitated polycarbonate resin with the filter, the mesh of the filter may be 1 μm to 10 μm.

Preferably, the mesh of the filter may be 3 μm to 7 μm.

In the washing of the precipitated polycarbonate resin, the precipitated polycarbonate resin may be washed using acetone. Specifically, the separated polycarbonate resin may be washed twice using 1 L of acetone.

In the drying of the precipitated polycarbonate resin, the precipitated polycarbonate resin may be dried in a vacuum oven at 40°C for 16 hours.

In an exemplary embodiment of the present invention, the phenol content of the recyclable polycarbonate is 0.5 mol% or less.

As the phenol content of the recyclable polycarbonate is decreased, a good-quality recyclable polycarbonate may be obtained, and the phenol content of the recyclable polycarbonate is preferably 0.2 mol % or less, more preferably the NMR detection limit or less.

In an exemplary embodiment of the present invention, the lower the phenol content of the recyclable polycarbonate is, the more desirable the recyclable polycarbonate is, so that the lower limit is not particularly limited, but may be, for example, 0.001 mol% or more

When the phenol content of the recyclable polycarbonate satisfies the above-described range, the content of phenol included in the recyclable polycarbonate is very small, so that yellowing caused by phenol may be prevented. The degree of yellowing varies depending on the phenol content, and preferably when the phenol is reduced below the NMR detection limit, the yellowing phenomenon is reduced the most.

The phenol content of the recyclable polycarbonate may be calculated using 1H-NMR analysis. Specifically, the phenol content may be measured by adding trimethylsilane (TMS) as an internal standard, dissolving recyclable polycarbonate in a $CDCl_3$ solvent at 20 mg/ml, and then using Agilent 500 MHz equipment. For a peak area of 7.18 ppm in the measured 1H-NMR, 4H of the phenyl group of polycarbonate is employed as a reference, and the peak areas seen at 6.71 ppm and 4.74 ppm are specified to a phenyl group (2H) and a hydroxyl group (1H) of the phenol, respectively to convert the content of phenol present in the recyclable polycarbonate backbone into mol%.

In an exemplary embodiment of the present invention, the yellow index (YI) of the recyclable polycarbonate is 2.5 or less.

Specifically, the yellow index (YI) of the recyclable polycarbonate is 1 or more and 2.4 or less, 1.5 or more and 2.35 or less, or 1.95 or more and 2.34 or less.

When the yellow index of the recyclable polycarbonate satisfies the above-described range, it can be confirmed that the yellowing phenomenon of the recyclable polycarbonate is prevented.

The yellow index of the recyclable polycarbonate may be measured by injection molding a sample (width/-

height/thickness = 60 mm/40 mm/3 mm) at 270°C in accordance with ASTM D1925.

In an exemplary embodiment of the present invention, the weather resistance (△E) of the recyclable polycarbonate is 20 or less.

The yellowing phenomenon of the recyclable polycarbonate means the weather resistance measurement.

After L, a and b values are measured by the ASTM D7869 method, the corresponding sample is allowed to stand under the weather resistance conditions of 2,250 hr using a Weather-Ometer® machine, and then the weather resistance (△E) can be calculated by the following Equation 2 from L', a' and b' values measured again.

[Equation 2]

$$\triangle E = \sqrt{((L'-L)^2 + (a'-a)^2 + (b'-b)^2)}$$

In an exemplary embodiment of the present invention, the weather resistance (△E) of the recyclable polycarbonate is 20 or less, and may be preferably 16 or less, 15.5 or less, 15.2 or less or 10 or less.

The lower the weather resistance (△E), the more preferable the weather resistance (△E), so that the lower limit thereof is not particularly limited, but may be, for example, 5 or more, 6 or more, or 8 or more.

In an exemplary embodiment of the present invention, the weight average molecular weight (Mw) of the recyclable polycarbonate is 42,000 g/mol or more and 44,000 g/mol or less, but is not limited thereto.

More specifically, the recyclable polycarbonate has a weight average molecular weight of 42,500 g/mol or more and 43,400 g/mol or less.

The weight average molecular weight may be measured by calibrating with a PC standard using Agilent 1200 series.

In an exemplary embodiment of the present invention, the recyclable polycarbonate may have a melt index (MI) of 15 to 25. Specifically, the recyclable polycarbonate may have a melt index of 20 to 21.

The melt index may be measured at 300°C using a 1.2 kg weight in accordance with ASTM D1238.

In an exemplary embodiment of the present invention, the waste polycarbonate is included in an amount of 2 parts by weight to 20 parts by weight based on the total weight of 100 parts by weight of the first solution.

In an exemplary embodiment of the present invention, the solvent is included in an amount of 80 parts by weight to 90 parts by weight based on the total weight of 100 parts by weight of the first solution.

When the waste polycarbonate and the solvent are included in the first solution within the above-described range, the waste polycarbonate is not precipitated, and the first solution may be appropriately prepared.

In an exemplary embodiment of the present invention, in the preparing of the first solution by dissolving the waste polycarbonate in the solvent, the waste polycarbonate is dissolved in the solvent for 1 hour to 3 hours.

Specifically, the waste polycarbonate is dissolved in the solvent for 1 hour and 30 minutes to 2 hours and 30 minutes, preferably 2 hours.

When the waste polycarbonate is dissolved in an organic solvent for 1 hour to 3 hours as described above, the waste polycarbonate is not dissolved while swelling on the surface of the solvent, and is well dissolved in the solvent, so that the first solution may be properly prepared.

In an exemplary embodiment of the present invention, the preparing of the first solution by dissolving the waste polycarbonate in the solvent may be performed at room temperature. Specifically, the preparing of the first solution by dissolving the waste polycarbonate in the solvent may be performed at a temperature of 15°C to 25°C. When the waste polycarbonate is dissolved in the solvent at a temperature of 15°C to 25°C as described above, the degree of vaporization of the solvent is low, so that the desired first solution may be prepared without significantly changing the concentration of the solution.

In an exemplary embodiment of the present invention, the method for preparing recyclable polycarbonate may further include preparing the first solution, and then filtering the first solution with a filter. The filter may have a mesh of 0.45 μm to 10 μm.

In an exemplary embodiment of the present invention, the non-solvent is included in an amount of 30 parts by weight to 500 parts by weight based on the total weight of 100 parts by weight of the second solution.

When the non-solvent is included in the second solution within the above-described range, impurities such as an antioxidant or heat stabilizer may be effectively removed from the waste polycarbonate, and recyclable polycarbonate with a high yield may be obtained.

The impurities mean organic and inorganic dyes or pigments, heat stabilizers, antioxidants, UV stabilizers, flame retardants, antistatic agents, impact modifiers, plasticizers, glidants, or the like other than polymer compounds added during the preparation of polycarbonate, and are not limited thereto, and may mean all additives for preparing polycarbonate used in the art.

The antioxidant may be, for example, an Irgafos antioxidant, and the heat stabilizer may be, for example, a Tinuvin heat stabilizer.

The collecting of the precipitated polycarbonate resin means filtering out the precipitated polycarbonate resin by filtering a solution obtained by adding a non-solvent to the second solution with a filter.

In this case, in the separating of the precipitated polycarbonate resin with the filter, the mesh of the filter may be 1 $\mu$m to 10 $\mu$m, but is not limited thereto.

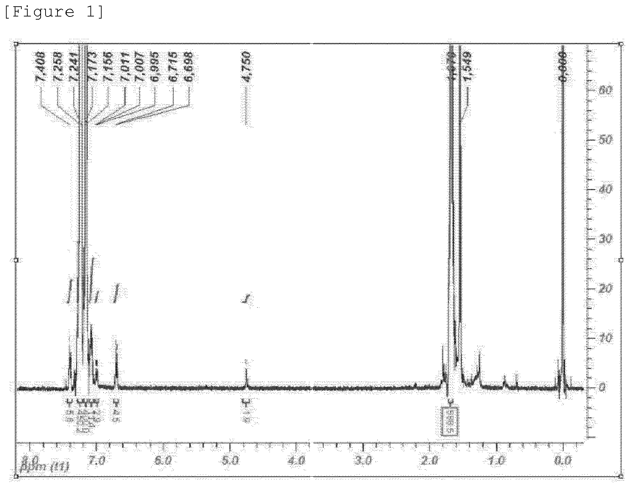

FIG. 1 illustrates the results of 1H-NMR analysis of the recyclable polycarbonate of Comparative Example 1 in which the phenol end-capper treatment is not performed. In FIG. 1, the phenyl group peaks of 7.26 ppm and 7.18 ppm corresponding to polycarbonate and the methyl group peak of 1.68 ppm appear large, and 6.74 ppm (2H) and 4.74 ppm (1H) corresponding to the end group of phenol are observed. Phenyl (2H) in the phenol end group overlapped with the polycarbonate peaks, and thus could not be specified.

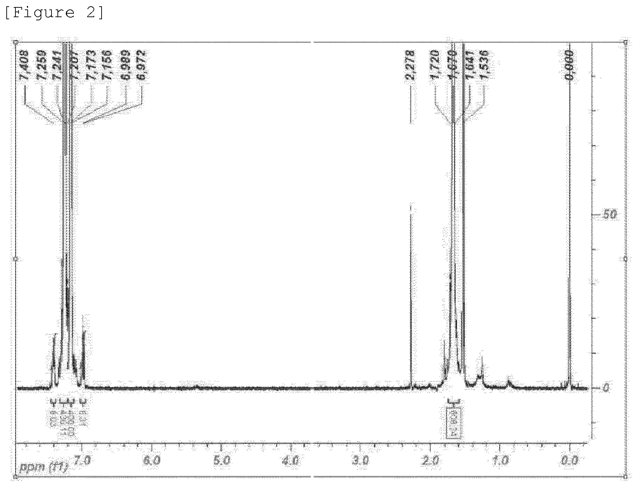

FIG. 2 illustrates the results of 1H-NMR analysis of the recyclable polycarbonate prepared by the method for preparing recyclable polycarbonate of the present invention. In FIG. 2, it can be observed that 6.74 ppm (2H) and 4.74 ppm (1H) corresponding to the phenol end group significantly decrease.

[Mode for Invention]

Hereinafter, the present invention will be exemplified in more detail through Examples. The present invention is not limited to these Examples, the Examples according to the present invention may be modified in various forms, and it should not be interpreted that the scope of the present invention is limited to the Examples to be described in detail below. The Examples of the present invention are provided for more completely explaining the present invention to a person with ordinary skill in the art.

**Examples and Comparative Examples.**

Example 1

A first solution was prepared by adding 360 g of waste polycarbonate to 2,040 g of a solvent dichloromethane in a reactor at room temperature (20°C) to dissolve the waste polycarbonate for 2 hours.

2.56 g of a catalyst Cu(Otf)$_2$ was added to the first solution and the resulting mixture was stirred at 300 rpm for 30 minutes.

Thereafter, a second solution was prepared by slowly introducing 7.23 g of acetic anhydride, which is a phenol end-capper, into the first solution and stirring the resulting mixture at room temperature (20°C) and 300 rpm for 6 hours.

18 g of acid clay as an adsorbent was added to the second solution to remove impurities from the second solution, and the adsorbent-added second solution was filtered using a 1 $\mu$m mesh filter to remove the adsorbent and impurities.

A polycarbonate resin was precipitated by slowly introducing 2,400 ml of acetone, which is a non-solvent, into the second solution. The precipitated polycarbonate resin was collected by filtering with a 5 $\mu$m mesh paper filter and washed twice with 1,000 ml of acetone.

Thereafter, 298 g of recyclable polycarbonate was obtained by drying the precipitated polycarbonate resin in a vacuum oven at 40°C for 16 hours. (Yield of 83% compared to waste polycarbonate input)

Example 2

305 g of recyclable polycarbonate was obtained in the same manner as in Example 1, except that 16.03 g of benzoic anhydride was applied as a phenol end-capper in Example 1. (Yield of 85% compared to waste polycarbonate input)

Example 3

292 g of recyclable polycarbonate was obtained in the same manner as in Example 1, except that 2.25 g of 4-(N,N-dimethylamino)pyridine HCl) was used as a catalyst in Example 1. (Yield of 81% compared to waste polycarbonate input)

Example 4

295 g of recyclable polycarbonate was obtained in the same manner as in Example 2, except that 2.25 g of 4-(N,N-dimethylamino)pyridine HCl) was used as a catalyst in Example 2. (82% compared to waste polycarbonate input)

Example 5

305 g of recyclable polycarbonate was obtained in the same manner as in Example 3, except that 9.96 g of benzoic anhydride was applied as a phenol end-capper in Example 3. (Yield of 85% compared to waste polycarbonate input)

Example 6

288 g of recyclable polycarbonate was obtained in the same manner as in Example 3, except that 8.54 g of 2,2-dimethylpropanoyl chloride was applied as a phenol end-capper in Example 3. (Yield of 80% compared to waste polycarbonate input)

Comparative Example 1

A first solution was prepared by adding 360 g of waste polycarbonate to 2,040 g of a solvent dichloromethane in a reactor at room temperature (20°C) to dissolve the waste polycarbonate for 2 hours.
18 g of acid clay as an adsorbent was added to the first solution to remove impurities from the first solution, and the adsorbent-added first solution was filtered using a 1 μm mesh filter to remove the adsorbent and impurities.
Thereafter, a polycarbonate resin was precipitated by slowly introducing 2,400 ml of acetone, which is a non-solvent, into the first solution. The precipitated polycarbonate resin was collected by filtering with a 5 μm mesh paper filter and washed twice with 1,000 ml of acetone.
Thereafter, 302 g of recyclable polycarbonate was obtained by drying the precipitated polycarbonate resin in a vacuum oven at 40°C for 16 hours. (Yield of 84% compared to waste polycarbonate input)

**Experimental Example.**

The recyclable polycarbonates prepared in the Examples and the Comparative Examples were analyzed as follows, and the analysis results are shown in the following Table 1.

- Weight average molecular weight (Mw): measured by calibrating with a PC standard using Agilent 1200 series.
- Melt index (MI): measured at 300°C using a 1.2 kg weight in accordance with ASTM D1238.
- Measurement of phenol content according to 1H-NMR analysis: measured by adding trimethylsilane (TMS) as an internal standard, dissolving recyclable polycarbonate in a $CDCl_3$ solvent at 20 mg/ml, and then using Agilent 500 MHz equipment.

Specifically, for a peak area of 7.18 ppm in the measured NMR, 4H of the phenyl group of polycarbonate is employed as a reference, and the peak areas seen at 6.71 ppm and 4.74 ppm are specified to a phenyl group (2H) and a hydroxyl group (1H), respectively to convert the content of phenol present in the recyclable polycarbonate backbone into mol%. The area proportion of 6.71 ppm (2H) of the phenyl peak at the end group of phenol was calculated based on the 7.18 ppm (4H) of the phenyl peak of polycarbonate. The width proportion was converted into the number of protons and shown as a percentage. When width proportion is represented by Equation 1, it will be as follows.

[Equation 1]

$$mol\% = \frac{Area(peak, 6.71\,ppm)}{Area(peak, 7.18\,ppm)} \times \frac{4(4H, ph)}{2(2H, ph)} \times 100(\%)$$

- Yellow Index (YI): YI values were measured by injection molding a sample (width/height/thickness = 60 mm/40 mm/3 mm) at 270°C in accordance with ASTM D1925.
- Weather resistance (△E): after L, a and b values are measured by the ASTM D7869 method, the corresponding test specimen is allowed to stand under the weather resistance conditions of 2,250 hr using a Weather-Ometer® machine, and then the weather resistance (△E) can be calculated by the following Equation 2 from L', a' and b' values measured again.

[Equation 2]

$$\triangle E = \sqrt{((L'-L)^2 + (a'-a)^2 + (b'-b)^2)}$$

[Table 1]

|  | Mw (g/mol) | MI (g/10 min) | Phenol content (mol%) | YI | ΔE |
|---|---|---|---|---|---|
| Example 1 | 43,300 | 20 | 0.14 | 1.99 | 7.7 |
| Example 2 | 43,400 | 20 | 0.13 | 2.07 | 9.6 |
| Example 3 | 42,500 | 20 | 0.29 | 2.34 | 15.2 |
| Example 4 | 42,500 | 20 | 0.20 | 2.12 | 12.8 |
| Example 5 | 42,600 | 21 | 0.21 | 1.95 | 6.1 |
| Example 6 | 43,000 | 19 | 0.33 | 2.01 | 7.0 |
| Comparative Example 1 | 42,400 | 20 | 2.24 | 3.67 | 23.7 |

As can be seen from the results in Table 1, it was confirmed that the recyclable polycarbonates of Examples 1 to 6, prepared by the method for preparing recyclable polycarbonate according to the present invention, had significantly lower phenol contents, lower yellow index (YI) values and lower weather resistance (△E) than the Comparative Example, and thus can effectively prevent the yellowing phenomenon.

Meanwhile, the weight average molecular weight and melt index values of Examples 1 to 6 are not significantly different from those of Comparative Example 1, confirming that the physical properties of weight average molecular weight and melt index are not changed because the backbone of the polycarbonate is not decomposed.

## Claims

1. A method for preparing recyclable polycarbonate, the method comprising:

   preparing a first solution by dissolving waste polycarbonate comprising phenol end groups in the backbone thereof in a solvent;
   preparing a second solution by adding a phenol end-capper to the first solution; removing impurities from the second solution by adding an adsorbent to the second solution;
   precipitating a polycarbonate resin by adding a non-solvent to the second solution from which the impurities have been removed; and
   collecting the precipitated polycarbonate resin.

2. The method of claim 1, wherein the phenol end-capper is an anhydride or acyl halide.

3. The method of claim 1, wherein the adsorbent is one or a combination of two or more selected from the group consisting of silica, alumina, activated carbon, acid clay, magnesium silicate and aluminosilicate.

4. The method of claim 1, wherein the adsorbent is comprised in an amount of 0.1 to 5 parts by weight based on a total weight of 100 parts by weight of the second solution.

5. The method of claim 2, wherein the anhydride is acetic anhydride or benzoic anhydride.

6. The method of claim 2, wherein the acyl halide is benzoyl chloride or 2,2-dimethylpropanoyl chloride.

7. The method of claim 1, wherein the solvent is a cyclic ether-based solvent, a linear or cyclic carbonate-based solvent, a hydrocarbon solvent having 1 to 8 carbon atoms, which comprises one or more halogen atoms, methylpyrrolidone, dimethylformamide or dimethyl sulfoxide.

8. The method of claim 1, wherein the non-solvent is a hydrocarbon compound comprising one or more selected from the group consisting of an alcohol, ketone, ether, a cycloalkane, ester, carboxylic acid and a nitrile.

9. The method of claim 1, wherein the phenol end-capper is comprised in an amount of 0.1 parts by weight to 5 parts by weight based on a total weight of 100 parts by weight of the first solution.

10. The method of claim 1, wherein the waste polycarbonate is comprised in an amount of 2 parts by weight to 20 parts by weight based on the total weight of 100 parts by weight of the first solution.

11. The method of claim 1, wherein the non-solvent is comprised in an amount of 30 parts by weight to 500 parts by weight based on the total weight of 100 parts by weight of the second solution.

12. The method of claim 1, wherein a phenol content of the recyclable polycarbonate is 0.5 mol% or less, and the phenol content is determined by a 500 MHz NMR with an internal standard TMS.

13. The method of claim 1, wherein a yellow index YI of the recyclable polycarbonate is 2.5 or less, and the yellow index YI is determined by standard ASTM D1925.

14. The method of claim 1, wherein a weather resistance △E of the recyclable polycarbonate is 20 or less, and the weather resistance △ E is determined by standard ASTM D7869.

**Patentansprüche**

1. Verfahren zur Herstellung von recyclingfähigem Polycarbonat, wobei das Verfahren umfasst:

Herstellen einer ersten Lösung durch Lösen von Abfallpolycarbonat, das Phenolendgruppen in seiner Hauptkette umfasst, in einem Lösungsmittel;
Herstellen einer zweiten Lösung durch Zugeben eines Phenol-Endverkappers zu der ersten Lösung; Entfernen von Verunreinigungen aus der zweiten Lösung durch Zugeben eines Adsorptionsmittels zu der zweiten Lösung;
Ausfällen eines Polycarbonatharzes durch Zugeben eines Nicht-Lösungsmittels zu der zweiten Lösung, aus der die Verunreinigungen entfernt wurden; und
Sammeln des ausgefällten Polycarbonatharzes.

2. Verfahren nach Anspruch 1, wobei der Phenol-Endverkapper ein Anhydrid oder Acylhalogenid ist.

3. Verfahren nach Anspruch 1, wobei das Adsorptionsmittel eines oder eine Kombination von zwei oder mehr ist, ausgewählt aus der Gruppe bestehend aus Siliciumdioxid, Aluminiumoxid, Aktivkohle, saurem Ton, Magnesiumsilicat und Aluminosilicat.

4. Verfahren nach Anspruch 1, wobei das Adsorptionsmittel in einer Menge von 0,1 bis 5 Gewichtsteilen, bezogen auf ein Gesamtgewicht von 100 Gewichtsteilen der zweiten Lösung, enthalten ist.

5. Verfahren nach Anspruch 2, wobei das Anhydrid Essigsäureanhydrid oder Benzoesäureanhydrid ist.

6. Verfahren nach Anspruch 2, wobei das Acylhalogenid Benzoylchlorid oder 2,2-Dimethylpropanoylchlorid ist.

7. Verfahren nach Anspruch 1, wobei das Lösungsmittel ein Lösungsmittel auf Basis von cyclischem Ether, ein Lösungsmittel auf Basis von linearem oder cyclischem Carbonat, ein Kohlenwasserstofflösungsmittel mit 1 bis 8 Kohlenstoffatomen, das ein oder mehrere Halogenatome umfasst, Methylpyrrolidon, Dimethylformamid oder Dimethylsulfoxid ist.

8. Verfahren nach Anspruch 1, wobei das Nicht-Lösungsmittel eine Kohlenwasserstoffverbindung ist, die eines oder mehrere umfasst, ausgewählt aus der Gruppe bestehend aus einem Alkohol, Keton, Ether, einem Cycloalkan, Ester, Carbonsäure und einem Nitril.

9. Verfahren nach Anspruch 1, wobei der Phenol-Endverkapper in einer Menge von 0,1 Gewichtsteilen bis 5 Gewichtsteilen, bezogen auf ein Gesamtgewicht von 100 Gewichtsteilen der ersten Lösung, enthalten ist.

**10.** Verfahren nach Anspruch 1, wobei das Abfallpolycarbonat in einer Menge von 2 Gewichtsteilen bis 20 Gewichtsteilen, bezogen auf das Gesamtgewicht von 100 Gewichtsteilen der ersten Lösung, enthalten ist.

**11.** Verfahren nach Anspruch 1, wobei das Nicht-Lösungsmittel in einer Menge von 30 Gewichtsteilen bis 500 Gewichtsteilen, bezogen auf das Gesamtgewicht von 100 Gewichtsteilen der zweiten Lösung, enthalten ist.

**12.** Verfahren nach Anspruch 1, wobei ein Phenolgehalt des recyclingfähigen Polycarbonats 0,5 Mol-% oder weniger beträgt und der Phenolgehalt durch 500 MHz-NMR mit einem internen Standard TMS bestimmt wird.

**13.** Verfahren nach Anspruch 1, wobei ein Gelbindex YI des recyclingfähigen Polycarbonats 2,5 oder weniger beträgt und der Gelbindex YI durch den Standard ASTM D1925 bestimmt wird.

**14.** Verfahren nach Anspruch 1, wobei eine Wetterbeständigkeit △E des recyclingfähigen Polycarbonats 20 oder weniger beträgt und die Wetterbeständigkeit △E durch den Standard ASTM D7869 bestimmt wird.

**Revendications**

**1.** Procédé de préparation de polycarbonate recyclable, le procédé consistant à :

préparer une première solution en dissolvant des déchets de polycarbonate comprenant des groupes terminaux phénol dans son squelette dans un solvant ;
préparer une deuxième solution en ajoutant une coiffe terminale phénol à la première solution ;
retirer les impuretés de la deuxième solution en ajoutant un adsorbant à la deuxième solution ;
précipiter une résine de polycarbonate en ajoutant un non-solvant à la deuxième solution dont les impuretés ont été retirées ; et
collecter la résine de polycarbonate précipitée.

**2.** Procédé selon la revendication 1, dans lequel la coiffe terminale phénol est un anhydride ou un halogénure d'acyle.

**3.** Procédé selon la revendication 1, dans lequel l'adsorbant est un élément ou une combinaison de deux éléments ou plus sélectionnés dans le groupe constitué de silice, alumine, charbon actif, argile acide, silicate de magnésium et aluminosilicate.

**4.** Procédé selon la revendication 1, dans lequel l'adsorbant est compris dans une quantité de 0,1 à 5 parties en poids sur la base d'un poids total de 100 parties en poids de la deuxième solution.

**5.** Procédé selon la revendication 2, dans lequel l'anhydride est l'anhydride acétique ou l'anhydride benzoïque.

**6.** Procédé selon la revendication 2, dans lequel l'halogénure d'acyle est le chlorure de benzoyle ou le chlorure de 2,2-diméthylpropanoyle.

**7.** Procédé selon la revendication 1, dans lequel le solvant est un solvant à base d'éther cyclique, un solvant à base de carbonate cyclique ou linéaire, un solvant hydrocarboné ayant 1 à 8 atomes de carbone, qui comprend un ou plusieurs atomes d'halogène, méthylpyrrolidone, diméthylformamide ou diméthylsulfoxyde.

**8.** Procédé selon la revendication 1, dans lequel le non-solvant est un composé hydrocarboné comprenant un ou plusieurs éléments sélectionnés dans le groupe constitué d'un alcool, une cétone, un éther, un cycloalkane, un ester, un acide carboxylique et un nitrile.

**9.** Procédé selon la revendication 1, dans lequel la coiffe terminale phénol est comprise dans une quantité de 0,1 partie en poids à 5 parties en poids sur la base d'un poids total de 100 parties en poids de la première solution.

**10.** Procédé selon la revendication 1, dans lequel les déchets de polycarbonate sont compris dans une quantité de 2 parties en poids à 20 parties en poids sur la base du poids total de 100 parties en poids de la première solution.

**11.** Procédé selon la revendication 1, dans lequel le non-solvant est compris dans une quantité de 30 parties en poids à 500 parties en poids sur la base du poids total de 100 parties en poids de la deuxième solution.

12. Procédé selon la revendication 1, dans lequel une teneur en phénol du polycarbonate recyclable est 0,5 % en moles ou moins, et la teneur en phénol est déterminée par un NMR de 500 MHz par une norme interne TMS.

13. Procédé selon la revendication 1, dans lequel un indice de jaune YI du polycarbonate recyclable est 2,5 ou moins, et l'indice de jaune YI est déterminé par la norme ASTM D1925.

14. Procédé selon la revendication 1, dans lequel une résistance aux intempéries $\triangle E$ du polycarbonate recyclable est 20 ou moins, et la résistance aux intempéries $\triangle E$ est déterminée par la norme ASTM D7869.

[Figure 1]

[Figure 2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102192506
- US 6500914 B1
- WO 2020074983 A1
- US 4066630 A
- WO 2019156432 A1
- US 2010179292 A1
- US 5231149 A
- US 9096718 B2

**Non-patent literature cited in the description**

- *POLYMER*, vol. 42 (20), 8355-8359